# EUROPÄISCHE PATENTANMELDUNG

(11) **EP 3 584 721 A1**
(43) Veröffentlichungstag der Anmeldung: **25.12.2019**
(21) Anmeldenummer: 18178202.0
(22) Anmeldetag: 18.06.2018
(51) Int. Cl.: G06F 17/50, G05B 13/02

(54) **SYSTEM, COMPUTERGESTÜTZTES VERFAHREN UND COMPUTERPROGRAMMPRODUKT ZUM GENERIEREN VON KONSTRUKTIONSPARAMETERN EINER KOMPLEXEN VORRICHTUNG**

(71) Anmelder: Siemens Aktiengesellschaft, 80333 München (DE)
(72) Erfinder: Ertl, Harald, 90596 Schwanstetten (DE); Baudisch, Thomas, 86938 Schondorf am Ammersee (DE); Garhammer, Andreas, 84367 Reut (DE); Smirnov, Denis, 81543 Munich (DE); Guo, Yiqing, 90763 Fürth (DE); Utz, Andreas, 74572 Blaufelden (DE)

(57) **Zusammenfassung**

Eine Aufgabe der Erfindung ist es, das Entwerfen einer komplexen Vorrichtung zu erleichtern. Dazu werden in einem computergestützten Verfahren ausgehend von wenigstens einem Spezifikationsparameter Konstruktionsparameter von einer komplexen Vorrichtung mittels eines trainierten neuronalen Netzwerks generiert. Das neuronale Netzwerk wird auf Basis von Referenzdaten und Betriebsdaten trainiert, wobei ein nicht unerheblicher Teil der Daten aus den Iterationsschritten des Fachpersonals zum Trainieren genutzt wird. Die Referenzdaten kennzeichnen eine Vielzahl an komplexen Vorrichtungen, die in der Vergangenheit gebaut oder realisiert wurden, und deren jeweiligen wenigstens einen Spezifikationsparameter sowie jeweils Konstruktionsparameter. Die Betriebsdaten kennzeichnen die Vielzahl an komplexen Vorrichtungen und deren jeweilige Betriebsparameter, die mit den jeweiligen Konstruktionsparametern korrespondieren.

## Beschreibung

### Gebiet der Erfindung

Die Erfindung liegt auf dem Gebiet des Entwerfens von komplexen Vorrichtungen und entsprechenden Designtools und betrifft insbesondere ein System zum Generieren von Konstruktionsparametern einer komplexen Vorrichtung ausgehend von wenigstens einem Spezifikationsparameter, ein entsprechendes computergestütztes Verfahren sowie ein entsprechendes Computerprogrammprodukt.

### Hintergrund

Bei dem Entwurf/der Entwicklung von komplexen Vorrichtungen müssen üblicherweise einer oder mehrere Spezifikationsparameter erfüllt werden. Typischerweise ergeben sich solche Spezifikationsparameter aus der Beschreibung eines von einem Kunden angeforderten Produkts bzw. einer angeforderten komplexen Vorrichtung sowie aus den Anforderungen an die komplexe Vorrichtung bei ihrem Betrieb.

Bei einem herkömmlichen Designprozess - also dem Entwerfen und/oder Konstruieren einer solchen komplexen Vorrichtung und dem hierzu erforderlichen Bestimmen von Konstruktionsparametern dieser komplexen Vorrichtung - bestimmt eine Fachperson im jeweiligen Fachgebiet der jeweiligen komplexen Vorrichtung ein Initialdesign basierend auf dem Experten-Know-how dieser Fachperson und ausgehend von den Spezifikationsparametern. Daraufhin wird das Design dieser komplexen Vorrichtung, d.h. werden ihre Konstruktionsparameter so lange optimiert bis die Spezifikationsparameter erfüllt sind. Dabei korrespondieren die Spezifikationsparameter mit Betriebsparametern der komplexen Vorrichtung, wobei ein solcher Spezifikationsparameter insbesondere von einem oder von mehreren Betriebsparametern abhängen kann, d.h. ein solcher Spezifikationsparameter dann erfüllt ist, wenn einer oder mehrere bestimmte Betriebsparameter je in einem bestimmten Wertebereich liegen. So kann etwa die maximale elektrische Verlustleistung einer elektrischen Komponente als Spezifikationsparameter vorgegeben sein, wobei diese erfüllt ist, wenn die Stromaufnahme und die Spannung - d.h. der Spannungsabfall über die elektrische Komponente - im Betrieb je unter einem bestimmten Grenzwert liegen.

Auch kann es bei einem herkömmlichen Designprozess erforderlich sein, insbesondere wenn die Spezifikationsparameter in einem ersten Durchgang des Designprozesses nicht erreicht werden konnten, den Designprozess ein weiteres Mal mit einem anderen Initialdesign durchzuführen.

Oft sind bei einem herkömmlichen Designprozess viele Durchgänge mit unterschiedlichen Initialdesigns und/oder viele Schritte bei der Optimierung der Konstruktionsparameter erforderlich. Auch kann hierbei das finale Design, d.h. insbesondere können die Konstruktionsparameter der komplexen Vorrichtung von dem Initialdesign - auch wesentlich - abhängen. Damit kann ein solcher herkömmlicher Designprozess ressourcenintensiv sein und/oder das jeweils erzielte Ergebnis, d.h. die final durch die entwerfende Fachperson bestimmten Konstruktionsparameter, von der jeweiligen Fachperson abhängen.

Damit können sich insbesondere bei gleichen Anforderungen eines Kunden unterschiedliche Designs, d.h. Konstruktionsparameter für die komplexe Vorrichtung ergeben. Auch kann ein heute üblicher Designprozess - insbesondere aufgrund der vielen Iterationen bei der Optimierung der Konstruktionsparameter - zeitintensiv sein.

### Zusammenfassung der Erfindung

Der Erfindung liegt als eine Aufgabe zugrunde, das Entwerfen einer komplexen Vorrichtung zu erleichtern und/oder die Konstruktion einer komplexen Vorrichtung zu verbessern und insbesondere das Bestimmen von Konstruktionsparametern einer komplexen Vorrichtung effizienter zu machen und/oder eine Konstruktion einer solchen komplexen Vorrichtung, welche anhand so bestimmter Konstruktionsparameter konstruiert ist, zu harmonisieren.

Die Erfindung löst diese Aufgabe jeweils durch ein computergestütztes Verfahren zum Generieren von Konstruktionsparametern einer komplexen Vorrichtung ausgehend von wenigstens einem Spezifikationsparameter, durch ein System zum Generieren von Konstruktionsparametern einer komplexen Vorrichtung ausgehend von wenigstens einem Spezifikationsparameter und durch ein Computerprogrammprodukt zum Generieren von Konstruktionsparametern einer komplexen Vorrichtung ausgehend von wenigstens einem Spezifikationsparameter je gemäß der Lehre eines der Hauptansprüche. Vorteilhafte Ausführungsformen, Weiterbildungen und Varianten der vorliegenden Erfindung sind insbesondere Gegenstand der Unteransprüche.

Ein erster Aspekt der Erfindung betrifft ein computergestütztes Verfahren zum Generieren von Konstruktionsparametern einer komplexen Vorrichtung ausgehend von wenigstens einem Spezifikationsparameter mittels eines neuronalen Netzwerks. Das Verfahren weist Folgendes auf. Bei dem Verfahren werden Referenzdaten - in einigen Varianten insbesondere etwa historische Designs, eine Chronologie von Arbeitsschritten und/oder bestimmt mittels einer Sensitivitätsanalyse auf Basis von künstlich erzeugten Eingabeparametern - bereitgestellt, welche eine Vielzahl an komplexen Vorrichtungen und deren jeweiligen wenigstens einen Spezifikationsparameter sowie jeweils Konstruktionsparameter kennzeichnen. Bei dem Verfahren werden Betriebsdaten bereitgestellt, welche die Vielzahl an komplexen Vorrichtungen und deren jeweilige Betriebsparameter, die mit den jeweiligen Konstruktionsparametern korrespondieren, kennzeichnen. Zudem wird bei dem Verfahren das neuronale Netzwerk auf Basis der Referenzdaten und der Betriebsdaten trainiert. Schließlich werden die Konstruktionsparameter der komplexen Vorrichtung ausgehend von dem wenigstens einen Spezifikationsparameter und mittels des trainierten neuronalen Netzwerks generiert.

Einige Varianten der Erfindung finden Verwendung, wenn Eingabeparameter mittels einer dedizierten und komplexen Software zu einem konkreten Produkt mit gewünschten Betriebsparamter führen.
Vorteilhafte Verwendungen und entsprechend ausgebildete Varianten dafür können sein:
- Transformatoren: Geeignete Eingabeparameter und initiale Konfiguration wie Wicklungsanordnung und Wicklungstypen etc. führen mit Hilfe einer komplexen Software (Analyse und Verifikation) zu einem konkreten Design, bei dem Kundenanforderungen wie Verluste, Geräusche etc. erreicht werden müssen;
- Triebwerke;
- Gas-Turbinen; und
- Destilallationskolonnen für die chemische Industrie.

Im Sinne der Erfindung sind unter einem "Konstruktionsparameter" zumindest Daten zu verstehen, die wenigstens einen Teil einer komplexen Vorrichtung - insbesondere durch Zahlenwerte - charakterisieren und/oder in ihrer Ausführung bestimmen. So können insbesondere die physischen Dimensionen einer komplexen Vorrichtung durch einen oder durch mehrere Konstruktionsparameter charakterisiert und bestimmt sein - etwa die Gesamt-Höhe, -Breite und/oder -Länge einer solchen komplexen Vorrichtung durch die Angabe der Werte ihrer jeweiligen Ausdehnung in einem Längenmaß wie Meter oder Inch. Auch können die Materialeigenschaften und/oder die verwendeten Materialien durch einen oder mehrere Konstruktionsparameter bestimmt sein - etwa das Material eines Kabels einer solchen komplexen Vorrichtung durch die Angabe von einem das jeweilige Material kodierenden Zahlenwert oder Text - etwa "Kupfer", "Cu" für Kupfer oder beliebiger numerischer Identifier - bestimmt sein. Auch können abhängig vom Anwendungsfall bestimmte Konstruktionsparameter, insbesondere sogenannte Designparameter, besonders relevant sein.

So sind Designparameter von Transformatoren insbesondere:
- Variierte Parameter:
   ∘ Kerndurchmesser
   ∘ Elektromagnetischer Stahlsorte
   ∘ Wicklungsanordnungen
   ∘ Windungszahlen
   ∘ Anzahl parallele Leiter in Wicklungen
   ∘ Anzahl Teilleiter in einem Leiter
   ∘ Stromdichten
   ∘ Anzahl Lagen oder Spulen in Wicklungen
   ∘ Kühlungsausrüstung
- Zielgrößen:
   ∘ Geometrische Daten:
      ▪ Max. Abmessungen
      ▪ Max. Gewichte
   ∘ Betriebsdaten:
      ▪ Kurzschlussimpedanz
      ▪ Max. Verluste
      ▪ Max. Geräusch
   ∘ Minimale Kosten

Im Sinne der Erfindung sind unter einem "Betriebsparameter" zumindest Daten zu verstehen, welche wenigstens einen Teil einer komplexen Vorrichtung bei ihrem Betrieb und/oder den Betrieb der komplexen Vorrichtung charakterisieren. Dabei sind solche Betriebsparameter insbesondere von einem oder von mehreren Konstruktionsparametern abhängig und/oder können diesen entsprechen. So können etwa die physischen Dimensionen einer solchen komplexen Vorrichtung auch Betriebsparameter sein. Zudem können Leistungswerte, das Auftreten von Störungen und/oder Zahlenwerte die den Betrieb einer komplexen Vorrichtung oder ihrer Komponenten charakterisieren Betriebsparameter sein.

Im Sinne der Erfindung ist unter einer "komplexen Vorrichtung" zumindest eine Vorrichtung zu verstehen, welche mehrere Konstruktionsparameter und Betriebsparameter aufweist und dabei zwischen den Konstruktionsparametern und den Betriebsparametern ein derart komplexer Zusammenhang besteht, dass zumindest bei allgemein gewählten Werten oder Daten für die Konstruktionsparameter kein allgemeiner funktionaler - insbesondere mathematischer - Zusammenhang angegeben werden kann. Dabei können einige solcher komplexen Vorrichtungen durch hochdimensionale Differenzialgleichungen beschreibbar sein, welche jedoch aufgrund ihrer hohen Dimensionalität und der komplexen Zusammenhänge der Konstruktionsparameter und der Betriebsparameter keine oder nur für beschränkte Wertebereiche stabile Lösungen aufweisen.

Im Sinne der Erfindung ist unter einem "neuronalen Netzwerk" zumindest ein künstliches neuronales Netzwerk zu verstehen. Ein solches neuronales Netzwerk - oder kurz "neuronales Netz" - kann insbesondere eine adaptierbare Transformation von Eingangswerten zu Ausgangswerten aufweisen, wobei die Transformation über eine oder vorzugsweise mehrere Zwischenebenen - sogenannte Schichten des neuronalen Netzes - erfolgen kann. Zum Adaptieren kann das neuronale Netz insbesondere mit Daten für die Eingangswerte und ggf. zugeordnete Daten für die Ausgangswerte trainiert werden, was üblicherweise als sogenanntes "Supervised Learning" erfolgt. Insbesondere kann ein solches künstliches neuronales Netzwerk elektronisch und/oder digital implementiert sein.

Ein Vorteil des Generieren der Konstruktionsparameter der komplexen Vorrichtung mittels des trainierten neuronalen Netzwerks kann insbesondere darin liegen, dass die so bestimmten Konstruktionsparameter und somit das Design der komplexen Vorrichtung reproduzierbar - und insbesondere unabhängig von einer jeweiligen Fachperson - bestimmt werden können, womit sich die Konstruktion einer solchen komplexen Vorrichtung harmonisieren lässt. Insbesondere durch eine solche Harmonisierung können Designs von komplexen Vorrichtungen und damit Konstruktionen von komplexen Vorrichtung basierend auf den jeweiligen Konstruktionsparametern mit gleichbleibender Qualität und/oder mit gleichartiger Art und Weise des jeweiligen Designs bereitgestellt und/oder hergestellt werden. Auch lässt sich insbesondere damit eine höhere Kompatibilität zwischen mehreren so konstruierten - d.h. mit so generierten Konstruktionsparametern - komplexen Vorrichtungen erzielen. Ein Vorteil des Trainierens des neuronalen Netzwerks auf Basis sowohl der Referenzdaten als auch der Betriebsdaten kann auch insbesondere darin liegen, dass sich sowohl ein Zusammenhang zwischen Spezifikationsparametern und möglichen Lösungen für diese Spezifikationsparameter, d.h. die jeweiligen Konstruktionsparameter, als auch die sich aus den jeweiligen Konstruktionsparametern ergebenden Betriebsparameter trainieren lassen, wodurch insbesondere ein effizienteres Training und/oder eine schnellere Konvergenz des neuronalen Netzwerks ermöglicht wird.

Auch lässt sich auf diese vorteilhafte Weise - insbesondere bei komplexen Vorrichtungen, bei welchen ein Experte eine Vielzahl an Designiterationen durchführen muss, um geeignete Konstruktionsparameter zu finden - die absolute/totale Zeit, welche zum Generieren/Finden der Konstruktionsparameter benötigt wird, reduzieren. So kann etwa mit hinreichender Rechenleistung eine geeignete oder die optimale Lösung für die jeweiligen Konstruktionsparameter innerhalb weniger Sekunden gefunden werden. Insbesondere kann beim (manuellen) Design einer solchen komplexen Vorrichtung wie ein Transformator eine Schwierigkeit insbesondere darin bestehen, dass stark nichtlineare Funktionen wie z.B. eine Kostenfunktion trotzdem zu diskreten Werten wie z.B. die Anzahl der Windungen führen müssen. Dabei kann ein Vorteil des neuronalen Netzes insbesondere darin liegen, dass dieses auch für derartige stark nichtlineare Funktionen trainiert werden kann und/oder eine geeignete Lösung ausgibt.

In einigen vorteilhaften Ausführungsformen werden im Verfahren weiterhin manuelle Designiterationen von mindestens einer komplexen Vorrichtung der Vielzahl an komplexen Vorrichtungen zum Erreichen des wenigstens einen Spezifikationsparameters dieser mindestens einen komplexen Vorrichtung überwacht. Zudem werden im Verfahren die Referenzdaten angepasst, wobei bezüglich dieser mindestens einen komplexen Vorrichtung die Konstruktionsparameter je manueller Designiteration gespeichert werden. Außerdem werden im Verfahren die Betriebsdaten angepasst, wobei bezüglich dieser mindestens einen komplexen Vorrichtung die Betriebsparameter je manueller Designiteration gespeichert werden. Dabei wird das neuronale Netzwerk auf Basis dieser angepassten Referenzdaten und Betriebsdaten trainiert. Auf diese vorteilhafte Weise lässt sich das neuronale Netzwerk nicht nur auf Basis von (finalen) Konstruktionsparametern für die komplexen Vorrichtungen der Vielzahl an komplexen Vorrichtungen trainieren, sondern auch auf Basis der Konstruktionsparameter für die mindestens eine komplexe Vorrichtung, welche je manueller Designiteration - insbesondere durch eine Fachperson eingegeben und - verwendet worden sind, um den wenigstens einen Spezifikationsparameter für die mindestens eine komplexe Vorrichtung zu erreichen. Auch wird es ermöglicht, das neuronale Netzwerk mit den jeweiligen Betriebsparametern, welche mit den Konstruktionsparametern für die jeweilige Designiteration korrespondieren, zu trainieren, sodass dem neuronalen Netzwerk beim Training ein Weg zum Design der mindestens einen komplexen Vorrichtung sowie der Erfolg oder Misserfolg der einzelnen manuellen Designiterationen - also inwiefern die mindestens eine komplexe Vorrichtung aufgrund ihrer jeweiligen Betriebsparameter je Designiteration dem wenigstens einen Spezifikationsparameter entspricht - vorgegeben werden. Hierdurch lässt sich insbesondere eine bessere und/oder schnellere Konvergenz beim Trainieren des neuronalen Netzwerks erzielen. Auch kann ein Vorteil des Trainings mit den angepassten Referenzdaten und Betriebsdaten, welche die Konstruktionsparameter und korrespondierenden Betriebsparameter je Designiteration kennzeichnen, insbesondere darin liegen, dass die von dem neuronalen Netzwerk generierten Konstruktionsparameter mit solchen Konstruktionsparametern, die eine entsprechende Fachperson bestimmen würde, konvergieren und/oder die vom trainierten neuronalen Netzwerk generierten Konstruktionsparameter und damit insbesondere die Lösung für das Design der komplexen Vorrichtung für eine Fachperson nachvollziehbarer wird.

In einigen Ausführungsformen weist das Verfahren weiterhin ein Simulieren der komplexen Vorrichtung auf Basis der generierten Konstruktionsparameter zum Bestimmen von Betriebsparametern der komplexen Vorrichtung auf. Bei solchen Ausführungsformen basiert das Trainieren des neuronalen Netzwerks zudem auf dem wenigstens einen Spezifikationsparameter und den Betriebsparametern der komplexen Vorrichtung. Auf diese vorteilhafte Weise wird es ermöglicht, beim Trainieren des neuronalen Netzwerks die Qualität der Lösung des neuronalen Netzwerks, also insbesondere das Generieren der Konstruktionsparameter der komplexen Vorrichtung, und dabei das Erreichen des wenigstens einen Spezifikationsparameters über die Betriebsparameter der komplexen Vorrichtung, die mit den generierten Konstruktionsparametern korrespondieren, als (weitere) Trainingsdaten vorzugeben bzw. des Weiteren das Trainieren (auch) darauf zu basieren, wodurch sich das Training verbessern lässt und insbesondere mittels eines so trainierten neuronalen Netzwerks bessere Lösungen generiert werden können, d.h. die Spezifikationsparameter gemäß der Betriebsparameter beim Betreiben der komplexen Vorrichtung besser eingehalten werden.

Bei einigen Ausführungsformen, bei welchen die komplexe Vorrichtung auf Basis der generierten Konstruktionsparameter simuliert wird und mit den so bestimmten Betriebsparametern das neuronale Netzwerk trainiert wird, wird das Trainieren des neuronalen Netzwerks iterativ unter jeweiliger Simulation der komplexen Vorrichtung auf Basis der jeweils generierten Konstruktionsparametern ausgeführt. Auf diese vorteilhafte Weise lässt sich das Trainieren des neuronalen Netzwerks und damit das trainierte neuronale Netzwerk weiter verbessern, wobei insbesondere die Lösung für die komplexe Vorrichtung, also die generierten Konstruktionsparameter iterativ weiter optimiert werden können. Auch kann ein Vorteil insbesondere darin liegen, dass keine weiteren - insbesondere externen - Daten für das weitere Training benötigt werden, also insbesondere auch bei gleich bleibenden Referenzdaten und Betriebsdaten das neuronale Netzwerk weiter verbessert werden kann.

In einigen Ausführungsformen wird im Verfahren mindestens eine komplexe Vorrichtung der Vielzahl an komplexen Vorrichtungen zum Bestimmen ihrer Betriebsparameter für das Bereitstellen oder Anpassen der Betriebsdaten simuliert. Ein Vorteil des Simulierens dieser mindestens einen komplexen Vorrichtung kann insbesondere darin liegen, dass durch die Simulation die Betriebsparameter effizient und/oder mit geringerem Ressourcenbedarf als etwa beim Bau eines Prototyps bestimmt werden können.

In einigen Ausführungsformen wird die komplexe Vorrichtung oder wird mindestens eine komplexe Vorrichtung der Vielzahl an komplexen Vorrichtungen mittels eines Simulationsprogrammes simuliert. Auf diese vorteilhafte Weise lassen sich die Betriebsparameter der komplexen Vorrichtung oder der mindestens einen komplexen Vorrichtung mittels eines Computers mit einem solchen Simulationsprogramm bestimmen, wobei üblicherweise die Güte beim Bestimmen der Betriebsparameter - also inwiefern die simulierten Betriebsparameter den tatsächlichen Betriebsparametern bei einem tatsächlichen Betrieb entsprechen - durch Einsatz entsprechender Simulationsprogramme und/oder durch erhöhte Rechenleistung gesteigert werden kann. Auch wird es ermöglicht, für eine Vielzahl von komplexen Vorrichtungen und/oder für eine Vielzahl von Designiterationen auf diese vorteilhafte Weise Betriebsparameter, insbesondere effizient, kostengünstig und/oder mit geringer zeitlicher Verzögerung, zu bestimmen.

In einigen Ausführungsformen werden im Verfahren zum Bereitstellen der Betriebsdaten für mindestens eine komplexe Vorrichtung der Vielzahl an komplexen Vorrichtungen die Betriebsparameter empfangen. Dabei werden zum Empfangen in einigen vorteilhaften Varianten die Betriebsparameter von einer Sensorik gesendet, die zum Messen der Betriebsparameter dieser mindestens einen komplexen Vorrichtung eingerichtet ist.

Bei einigen Ausführungsformen, bei welchen die Betriebsparameter der mindestens einen komplexen Vorrichtung von einer Sensorik empfangen werden, werden im Verfahren die Betriebsparameter dieser mindestens einen komplexen Vorrichtung mittels der Sensorik gemessen.

Ein Vorteil des Empfangens von mittels der Sensorik gemessenen Betriebsparametern kann insbesondere darin liegen, dass diese Betriebsparameter die tatsächlichen Betriebsparameter unter realen Betriebsumständen widerspiegeln. So können insbesondere Betriebsparameter der mindestens einen komplexen Vorrichtung aus einem Prototypenbetrieb, aus einem Feldeinsatz und/oder auch aus einem Produktiveinsatz gemessen und empfangen werden. Hierdurch lassen sich Einflussgrößen berücksichtigen, die etwa bei einer Simulation nicht oder nur mit hohem Aufwand berücksichtigt werden könnten, wie etwa Produktionsschwankungen, Schwankungen bei den in der Produktion verwendeten Materialien, Störeffekte oder reale Betriebsbedingungen, welche unbekannt und/oder bei einer Beschreibung eines Kunden für die komplexe Vorrichtung nicht hinreichend spezifiziert sind.

In einigen Ausführungsformen wird beim Trainieren des neuronalen Netzwerks eine Fehlergröße bestimmt. Dabei weist die Fehlergröße die Abweichung zwischen den Konstruktionsparametern der Referenzdaten und von mittels des neuronalen Netzwerks bestimmten Konstruktionsparametern auf.

In einigen Ausführungsformen wird beim Trainieren des neuronalen Netzwerks eine Fehlergröße bestimmt. Dabei weist die Fehlergröße die Abweichung zwischen den jeweiligen wenigstens einen Spezifikationsparameter und von jeweiligen Betriebsparametern auf, die mit den mittels des neuronalen Netzwerks bestimmten Konstruktionsparametern korrespondieren.

Bei einigen Ausführungsformen, bei welchen eine Fehlergröße bestimmt wird, kann die Fehlergröße eine Kombination von Abweichungen aufweisen und/oder können die Abweichungen, welche die Fehlergröße aufweist, miteinander kombiniert - insbesondere zu einem gewichteten Gesamtfehlerwert summiert - werden.

Ein Vorteil des Bestimmens der Fehlergröße kann insbesondere darin liegen, dass das neuronale Netzwerk auch auf Basis dieser Fehlergröße trainiert werden kann. Dabei lassen sich vorteilhaft mehrere Kriterien zum Trainieren des neuronalen Netzwerks über die Fehlergröße miteinander kombinieren und zusammenfassen. Auch lässt sich, insbesondere bei einem iterativen Trainieren des neuronalen Netzwerks, die Fehlergröße bei einer weiteren Iteration des Trainings verwenden. Außerdem kann das Bestimmen der Fehlergröße ermöglichen, den Erfolg des Trainings und/oder die Güte der jeweils beim Training bestimmten oder generierten Konstruktionsparameter mittels der, insbesondere bei mehreren Iterationen jeweiligen, Fehlergröße zu quantifizieren, wodurch insbesondere das Trainieren effizienter implementiert werden kann. Bei einigen Varianten, welche zum Training einen Backpropagation-Algorithmus implementieren - welcher insbesondere einem Gradientenabstieg zum Finden eines (lokalen) Optimums auf einer Hyperebene im Lösungsraum entspricht -, kann die Schrittweite abhängig von der Fehlergröße variiert werden kann. Bei einigen Varianten kann beim Trainieren, wenn ein großer Fehler vorliegt - also die bestimmten oder generierten Konstruktionsparameter noch weit von einer geeigneten Lösung abweichen - eine große Schrittweite oder eine große Anpassung des neuronalen Netzwerks gewählt werden, während, wenn der Fehler bereits klein ist, also die jeweilige Lösung bereits nahe am (lokalen) Optimum ist, eine kleine Schrittweite oder eine kleine Anpassung des neuronalen Netzwerks gewählt werden, wodurch insbesondere eine schnelle und/oder exakte Konvergenz ermöglicht wird.

Gemäß einigen Ausführungsformen, bei welchen eine Fehlergröße bestimmt wird, kennzeichnen die Referenzdaten für mindestens eine komplexe Vorrichtung der Vielzahl an komplexen Vorrichtungen für mehrere Designiterationen zum Erreichen des wenigstens einen Spezifikationsparameters jeweils je Designiteration Konstruktionsparameter. Zudem kennzeichnen die Betriebsdaten für diese mindestens eine komplexe Vorrichtung jeweils je Designiteration Betriebsparameter, wobei die Betriebsparameter mit den Konstruktionsparametern bezüglich dieser mindestens einen Vorrichtung und bezüglich der jeweiligen Designiteration korrespondieren. Bei solchen Ausführungsformen ist zudem das neuronale Netzwerk eingerichtet, ausgehend von dem wenigstens einen Spezifikationsparameter dieser mindestens einen komplexen Vorrichtung für mehrere Designiterationen jeweils die Konstruktionsparameter zu bestimmen. Außerdem werden im Verfahren, insbesondere beim Bestimmen der Fehlergröße, weiterhin die Abweichungen je Designiteration für diese mindestens eine komplexe Vorrichtung zwischen den Konstruktionsparametern der Referenzdaten und von mittels des neuronalen Netzwerks bestimmten Konstruktionsparametern bestimmt, wobei die Fehlergröße auch diese Abweichungen aufweist. Auf diese vorteilhafte Weise lassen sich mittels des neuronalen Netzwerks Konstruktionsparameter für mehrere Designiterationen generieren und/oder lässt sich das neuronale Netzwerk entsprechend trainieren, einen - insbesondere manuellen Designprozess - nachzubilden, wodurch eine von dem neuronalen Netzwerk generierte Lösung, also insbesondere die Konstruktionsparameter der komplexen Vorrichtung für eine Fachperson nachvollziehbar werden und/oder es ermöglicht wird, das neuronale Netzwerk spezifisch zu trainieren, so dass es einen bestimmten Weg beim Generieren der Konstruktionsparameter über mehrere Designiterationen ausführt. Insbesondere durch die Nachvollziehbarkeit kann es einer Fachperson ermöglicht werden, das Design - d.h. die Konstruktionsparameter der komplexen Vorrichtung - weiter anzupassen und/oder zu optimieren, so dass die komplexe Vorrichtung sich weiter verbessern lässt und/oder weitere Spezifikationsparameter berücksichtigt werden können. Auch kann in einigen Varianten eine derartige Anpassung als Teil der Referenzdaten im Sinne von Konstruktionsparametern einer weiteren Designiteration für das Trainieren des neuronalen Netzwerks verwendet werden.

Bei einigen Ausführungsformen, bei welchen eine Fehlergröße bestimmt wird und die Referenzdaten für mindestens eine komplexe Vorrichtung der Vielzahl an komplexen Vorrichtungen jeweils je Designiteration Konstruktionsparameter für mehrere Designiterationen kennzeichnen, weist das Verfahren weiterhin auf: ein Simulieren von der mindestens einen komplexen Vorrichtung je Designiteration und auf Basis der jeweiligen Konstruktionsparameter zum Bereitstellen ihrer jeweiligen Betriebsparameter für das Bereitstellen oder das Anpassen der Betriebsdaten. Zudem werden im Verfahren, insbesondere beim Bestimmen der Fehlergröße, weiterhin die Abweichungen je Designiteration für diese mindestens eine komplexe Vorrichtung zwischen dem wenigstens einen Spezifikationsparameter dieser mindestens einen komplexen Vorrichtung und den jeweiligen Betriebsparametern für die jeweilige Designiteration bestimmt, wobei die Fehlergröße auch diese Abweichungen aufweist.

Bei einigen Ausführungsformen, bei welchen eine Fehlergröße bestimmt wird, ist das neuronale Netzwerk eingerichtet, ausgehend von dem wenigstens einen Spezifikationsparameter der komplexen Vorrichtung je Designiteration von mehreren Designiterationen die Konstruktionsparameter der komplexen Vorrichtung zu generieren. Zudem werden im Verfahren je Designiteration die jeweiligen Betriebsparameter der komplexen Vorrichtung simuliert. Außerdem werden im Verfahren, insbesondere beim Bestimmen der Fehlergröße, weiterhin die Abweichungen je Designiteration zwischen dem wenigstens einen Spezifikationsparameter und den jeweiligen Betriebsparametern bestimmt, wobei die Fehlergröße auch diese Abweichungen aufweist. Hieraus können sich Vorteile ergeben, die den Vorteilen von Ausführungsformen entsprechen, bei welchen die Referenzdaten die Konstruktionsparameter je Designiteration bezüglich mindestens einer komplexen Vorrichtung der Vielzahl an komplexen Vorrichtungen kennzeichnen. Auch wird es auf diese vorteilhafte Weise ermöglicht, das neuronale Netzwerk basierend auf einer Serie von Konstruktionsparametern und korrespondierenden Betriebsparametern für die komplexe Vorrichtung zu trainieren, wobei insbesondere die Fehlergröße und/oder das Trainieren so ausgestaltet sein können, dass der Fehler dann besonders gering ist, wenn die jeweiligen Betriebsparameter zu dem Spezifikationsparameter über die Serie hin zu einem finalen Wert konvergieren. Auf diese vorteilhafte Weise lässt sich das neuronale Netzwerk trainieren, eine nachvollziehbare und/oder konvergierende Lösung - d.h. Konstruktionsparameter für die komplexe Vorrichtung über mehrere Designiterationen, deren jeweils korrespondierende Betriebsparameter dem wenigstens einen Spezifikationsparameter mit fortschreitenden Designiteration zunehmend entsprechen - zu generieren.

Bei einigen Ausführungsformen, bei welchen eine Fehlergröße bestimmt wird, wird das Trainieren des neuronalen Netzwerks mittels eines Backpropagation-Algorithmus ausgeführt und die Fehlergröße minimiert. Auf diese vorteilhafte Weise lässt sich basierend auf der Fehlergröße eine schnelle Konvergenz erreichen und/oder lassen sich über die Fehlergröße verschiedene Kriterien für das Training des neuronalen Netzwerks - insbesondere gewichtet - mit einbeziehen.

In einigen Ausführungsformen sind die Referenzdaten in einer ontologisch strukturierten Datenbank gespeichert.

In einigen Ausführungsformen ist für mindestens eine komplexe Vorrichtung der Vielzahl an komplexen Vorrichtungen ein Initialdesign in einer ontologisch strukturierten Datenbank gespeichert.

Ein Vorteil einer ontologisch strukturierten Datenbank und der Speicherung der Referenzdaten, der Betriebsdaten und/oder eines Initialdesigns in dieser kann insbesondere darin liegen, dass die entsprechenden Daten dabei so strukturiert gespeichert sein können, dass eine effiziente (Ähnlichkeits-) Suche für bestimmte Kategorien an komplexen Vorrichtungen, Spezifikationsparametern, Konstruktionsparametern und/oder Betriebsparametern über die ontologisch strukturierte Datenbank ermöglicht wird.

Bei einigen Ausführungsformen, bei welchen die Referenzdaten und/oder die Betriebsdaten in einer ontologisch strukturierten Datenbank gespeichert sind, weist das Verfahren weiterhin ein Speichern der Referenzdaten und/oder der Betriebsdaten in der ontologisch strukturierten Datenbank auf. Dabei kann in einigen vorteilhaften Varianten, insbesondere zum Aufbauen der Ontologie, eine Sensitivitätsanalyse bezüglich eines der Konstruktionsparameter und/oder bezüglich eines Spezifikationsparameters ausgeführt werden, so dass bestimmt wird, von welchen Konstruktionsparametern und/oder von welchen Spezifikationsparametern bestimmte Betriebsparameter besonders abhängen oder entsprechend umgekehrt.

Bei einigen Ausführungsformen, bei welchen die Referenzdaten und/oder die Betriebsdaten in einer ontologisch strukturierten Datenbank gespeichert sind, weist das Verfahren ein Abrufen der Referenzdaten zum Bereitstellen von diesen und/oder ein Abrufen der Betriebsdaten zum Bereitstellen von diesen aus der ontologisch strukturierten Datenbank auf.

Ein Vorteil eines Speicherns eines Initialdesigns in einer ontologisch strukturierten Datenbank kann insbesondere darin liegen, dass für ein ähnliches Design, insbesondere basierend auf eine Ähnlichkeitssuche in der ontologisch strukturierten Datenbank, dieses Initialdesign aus der ontologisch strukturierten Datenbank abgerufen werden kann. Daraufhin wird das Initialdesign in einigen vorteilhaften Varianten als unmittelbare Lösung ausgeschlossen, aber mittels des neuronalen Netzwerks eine Lösung, insbesondere basieren auf dem Initialdesign, bestimmt.

Bei einigen Ausführungsformen, bei welchen ein Initialdesign in einer ontologisch strukturierten Datenbank gespeichert ist, kann das Verfahren weiterhin ein Bestimmen eines Initialdesigns der komplexen Vorrichtung basierend auf einer Ähnlichkeitssuche über die ontologisch strukturierte Datenbank ausgehend von dem wenigstens einen Spezifikationsparameter aufweisen. Zudem basiert bei solchen Ausführungsformen das Trainieren des neuronalen Netzwerks des Weiteren auf dem Initialdesign der komplexen Vorrichtung und/oder auf dem Initialdesign der mindestens einen komplexen Vorrichtung. Schließlich geht das Generieren der Konstruktionsparameter der komplexen Vorrichtung des Weiteren von dem Initialdesign der komplexen Vorrichtung aus. Ein Vorteil des Trainierens und des Generierens auf Basis und/oder ausgehend von dem Initialdesign kann insbesondere darin liegen, dass die Konstruktionsparameter der komplexen Vorrichtung effizient, d.h. mit geringerer Rechenleistung, generiert werden können und/oder - insbesondere bei neuronalen Verfahren, die eine lokale Optimierung durchführen - eine Lösung, d.h. Konstruktionsparameter der komplexen Vorrichtung bestimmt werden, welche bei einem durch das Initialdesign vorgegebenen lokalen Gebiet für ähnliche komplexe Vorrichtungen, liegen.

Ein zweiter Aspekt der Erfindung betrifft ein System zum Generieren von Konstruktionsparametern einer komplexen Vorrichtung ausgehend von wenigstens einem Spezifikationsparameter. Das System weist ein neuronales Netzwerk und eine Datenverarbeitungsvorrichtung auf. Zudem weist das System eine oder mehrere Datenschnittstellen zum Empfangen von Referenzdaten, welche eine Vielzahl an komplexen Vorrichtungen und deren jeweiligen wenigstens einen Spezifikationsparameter sowie jeweils Konstruktionsparameter kennzeichnen, und zum Empfangen von Betriebsdaten, welche die Vielzahl an komplexen Vorrichtungen und deren jeweilige Betriebsparameter, die mit den jeweiligen Konstruktionsparametern korrespondieren, kennzeichnen auf. Die Datenverarbeitungsvorrichtung ist eingerichtet, die Referenzdaten und die Betriebsdaten mittels einer der Datenschnittstellen zu Empfangen. Zudem ist die Datenverarbeitungsvorrichtung eingerichtet, das neuronale Netzwerk auf Basis der Referenzdaten und der Betriebsdaten zu trainieren. Schließlich ist die Datenverarbeitungsvorrichtung eingerichtet, die Konstruktionsparameter der komplexen Vorrichtung ausgehend von dem wenigstens einen Spezifikationsparameter und mittels des trainierten neuronalen Netzwerks zu generieren.

Die bereits vorausgehend genannten möglichen Vorteile, Ausführungsformen oder Varianten des ersten Aspekts der Erfindung gelten entsprechend auch für das erfindungsgemäße System.

In einigen Ausführungsformen ist die Datenverarbeitungsvorrichtung zudem eingerichtet, das neuronale Netzwerk zu implementieren. Dazu kann in einigen Varianten die Datenverarbeitungsvorrichtung ein Programm mit computerlesbaren Anweisungen aufweisen, welche bei Ausführung auf der Datenverarbeitungsvorrichtung diese veranlassen, die Berechnungen, welche einem neuronalen Netzwerk entsprechen, auszuführen. Auf diese vorteilhafte Weise lässt sich das neuronale Netzwerk über einen handelsüblichen Computer implementieren.

In einigen Ausführungsformen weist das System eine weitere Datenverarbeitungsvorrichtung auf, welche spezifisch eingerichtet ist, die Berechnungen eines neuronalen Netzwerks auszuführen. In einigen Varianten kann diese weitere Datenverarbeitungsvorrichtung ein neuromorpher Prozessor, neuraler Prozessor oder ein neurosynaptischer Prozessor - oder kurz auch "Neuro-Prozessor" - wie etwa ein System mit einem oder mehreren TrueNorth-Prozessoren von IBM sein. Auf diese vorteilhafte Weise kann das neuronale Netzwerk besonders effizient, also insbesondere mit hoher Rechengeschwindigkeit und/oder geringen Strombedarf oder Ressourcenbedarf, implementiert werden.

In einigen Ausführungsformen ist eine der Datenschnittstellen als Netzwerkschnittstelle ausgebildet, so dass die Referenzdaten und/oder die Betriebsdaten über ein Netzwerk - etwa aus dem Internet - empfangen werden können.

In einigen Ausführungsformen weist das System eine Datenspeichervorrichtung auf, welche eingerichtet ist, die Referenzdaten und/oder die Betriebsdaten zu speichern. Dabei kann in einigen vorteilhaften Varianten eine der Datenschnittstellen als interne Datenschnittstelle zwischen der Datenspeichervorrichtung und der Datenverarbeitungsvorrichtung ausgebildet sein, so dass die Referenzdaten und/oder die Betriebsdaten mittels dieser internen Datenschnittstelle empfangen und/oder bereitgestellt werden können.

Ein dritter Aspekt der Erfindung betrifft ein Computerprogrammprodukt zum Generieren von Konstruktionsparametern einer komplexen Vorrichtung ausgehend von wenigstens einem Spezifikationsparameter. Dabei weist das Computerprogrammprodukt computerlesbare Anweisungen auf oder stellt diese bereit, wobei die computerlesbaren Anweisungen bei Ausführung auf einer Datenverarbeitungsvorrichtung diese veranlassen, ein neuronales Netzwerk auf Basis von Referenzdaten und von Betriebsdaten zu trainieren sowie die Konstruktionsparameter der komplexen Vorrichtung ausgehend von dem wenigstens einen Spezifikationsparameter und mittels des trainierten neuronalen Netzwerks zu generieren. Die Referenzdaten kennzeichnen eine Vielzahl an komplexen Vorrichtungen und deren jeweiligen wenigstens einen Spezifikationsparameter sowie jeweils Konstruktionsparameter. Die Betriebsdaten kennzeichnen die Vielzahl an komplexen Vorrichtungen und deren jeweilige Betriebsparameter, die mit den jeweiligen Konstruktionsparametern korrespondieren.

Die bereits vorausgehend genannten möglichen Vorteile, Ausführungsformen oder Varianten der vorhergehenden Aspekte der Erfindung gelten entsprechend auch für das erfindungsgemäße Computerprogrammprodukt zum Generieren von Konstruktionsparametern.

In einigen Ausführungsformen ist das Computerprogrammprodukt als ein mit entsprechenden computerlesbaren Anweisungen beschriebener Datenträger ausgebildet.

Alternativ ist in einigen Ausführungsformen das Computerprogrammprodukt als ein, insbesondere virtuelles, Rechnernetzwerk ausgebildet, welches eingerichtet ist, die computerlesbaren Daten bereitzustellen. Dabei können in einigen Varianten die computerlesbaren Daten auf einem Datenträger gespeichert sein. Alternativ oder zusätzlich kann das Rechnernetzwerk in einigen Varianten vorteilhaft eingerichtet sein, die computerlesbaren Anweisungen, insbesondere basierend auf einer textbasierten Beschreibung des Programms - insbesondere Quellcode - oder basierend auf mehreren Datenelementen - insbesondere verteilte Datensegmente, etwa eines Peer-To-Peer Netzwerks wie BitTorrent - über einen Algorithmus zu generieren und so bereitzustellen.

Weitere Vorteile, Merkmale und Anwendungsmöglichkeiten ergeben sich aus der nachfolgenden detaillierten Beschreibung von Ausführungsbeispielen und/oder aus den Figuren.

### Kurze Beschreibung der Figuren

Die Erfindung wird nachfolgend unter Bezugnahme auf die Figuren anhand vorteilhafter Ausführungsbeispiele näher erläutert. Gleiche Elemente oder Bauteile der Ausführungsbeispiele werden im Wesentlichen durch gleiche Bezugszeichen gekennzeichnet, falls dies nicht anders beschrieben wird oder sich nicht anders aus dem Kontext ergibt.

Hierzu zeigen, teilweise schematisiert:
- Fig. 1: ein Flussdiagramm eines computergestützten Verfahrens zum Generieren von Konstruktionsparametern einer komplexen Vorrichtung ausgehend von wenigstens einem Spezifikationsparameter nach einer Ausführungsform; und
- Fig. 2: ein System zum Generieren von Konstruktionsparametern einer komplexen Vorrichtung ausgehend von wenigstens einem Spezifikationsparameter nach einer Ausführungsform.

Die Figuren sind schematische Darstellungen verschiedener Ausführungsformen und/oder Ausführungsbeispiele der vorliegenden Erfindung. In den Figuren dargestellte Elemente und/oder Bauteile sind nicht notwendigerweise maßstabsgetreu dargestellt. Vielmehr sind die verschiedenen in den Figuren dargestellten Elemente und/oder Bauteile derart wiedergegeben, dass ihre Funktion und/oder ihr Zweck der Fachperson verständlich werden.

In den Figuren dargestellte Verbindungen und Kopplungen zwischen funktionellen Einheiten und Elementen können auch als indirekte Verbindungen oder Kopplungen implementiert werden. Insbesondere können Datenverbindungen drahtgebunden oder drahtlos, also insbesondere als Funkverbindung, ausgebildet sein. Auch können bestimmte Verbindungen, etwa elektrische Verbindungen, etwa zur Energieversorgung, der Übersichtlichkeit halber nicht dargestellt sein.

### Detaillierte Beschreibung von Ausführungsbeispielen

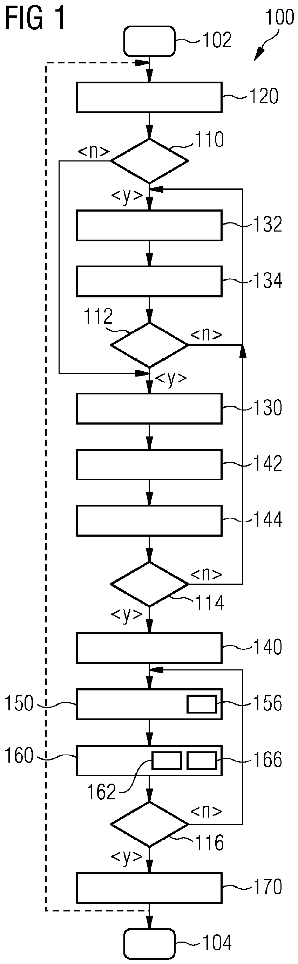

Fig. 1 illustriert mit einem Flussdiagramm ein computergestütztes Verfahren 100 zum Generieren von Konstruktionsparametern einer komplexen Vorrichtung ausgehend von wenigstens einem Spezifikationsparameter nach einer Ausführungsform der vorliegenden Erfindung. Dabei werden die Konstruktionsparameter der komplexen Vorrichtung mittels eines neuronalen Netzwerks generiert.

In einem Ausführungsbeispiel weist das Verfahren 100 die Verfahrensschritte 120, 130, 132, 134, 140, 142, 144, 150, 156, 160, 162, 166 und 170 sowie die Verfahrensbedingungen 110, 112, 114 und 116 auf. Das Verfahren 100 beginnt bei dem Verfahrensstart 102 und endet bei dem Verfahrensende 104, wobei einer oder mehrere Verfahrensschritte, insbesondere eine Sequenz von Verfahrensschritten, und vorzugsweise das gesamte Verfahren 100 wiederholt ausgeführt werden können.

Im Verfahrensschritt 120 wird der wenigstens eine Spezifikationsparameter bereitgestellt. Dazu kann dieser in einigen Varianten über eine Benutzerschnittstelle eingelesen werden. Auch kann dieser wenigstens eine Spezifikationsparameter vorteilhaft basierend auf der Prozessierung natürlicher Sprache - d.h. Natural Language Processing - aus Angaben des Benutzers und/oder einer Beschreibung eines Kunden für die gewünschte komplexe Vorrichtung extrahiert werden. Dabei versteht es sich, dass auch weitere derartige Spezifikationsparameter für die komplexe Vorrichtung bereitgestellt und insbesondere extrahiert werden können und/oder das Verfahren, insbesondere das Generieren der Konstruktionsparameter der komplexen Vorrichtung, auch von diesen weiteren Spezifikationsparametern ausgehen kann.

Insbesondere um im Verfahrensschritt 130 Referenzdaten bereitzustellen und/oder im Verfahrensschritt 140 Betriebsdaten bereitzustellen, wird bei der Verfahrensbedingung 110 geprüft, ob die Referenzdaten bzw. Betriebsdaten noch keine Vielzahl an komplexen Vorrichtungen umfassen und/oder ob mindestens eine komplexe Vorrichtung für die Vielzahl an komplexen Vorrichtungen ergänzt werden soll.

Falls die Referenzdaten bzw. Betriebsdaten um die mindestens eine komplexe Vorrichtung ergänzt werden sollen, also insbesondere Daten bzgl. der mindestens einen komplexen Vorrichtung ergänzt oder neu hinzugefügt werden werden sollen - was im Flussdiagramm bei Verfahrensbedingung 110 durch <y> symbolisiert ist -, werden im Verfahrensschritt 132 eine oder mehrere manuelle Designiterationen für diese mindestens eine komplexe Vorrichtung überwacht, wobei die manuellen Designiterationen darauf abzielen, den wenigstens einen Spezifikationsparameter dieser mindestens einen komplexen Vorrichtung zu erreichen.

In einigen Varianten passt dabei eine Fachperson auf dem jeweiligen Gebiet der jeweiligen zu konstruierenden komplexen Vorrichtung einen oder mehrere Konstruktionsparameter der komplexen Vorrichtung so an, dass der wenigstens eine Spezifikationsparameter dieser mindestens einen komplexen Vorrichtung erreicht oder sich zumindest diesem genähert wird.

Dabei kann sich in einigen Varianten je Änderung der Konstruktionsparameter nicht nur der wenigstens eine Spezifikationsparameter ändern, sondern können sich - insbesondere aufgrund von komplexen funktionalen Zusammenhängen der Konstruktionsparameter und Spezifikationsparameter - eine Vielzahl an Spezifikationsparametern ändern.

Dabei werden im Verfahrensschritt 134 je manueller Designiteration die Konstruktionsparameter dieser mindestens einen komplexen Vorrichtung und insbesondere ihre Änderung aufgezeichnet und die Referenzdaten bezüglich dieser mindestens einen komplexen Vorrichtung, welche somit eine der komplexen Vorrichtungen der Vielzahl an komplexen Vorrichtungen ist, angepasst, so dass die Referenzdaten für diese mindestens eine komplexe Vorrichtung je manueller Designiteration die Konstruktionsparameter aufweist.

In einer zum Ausführen der Verfahrensschritte 132 und 134 alternativen Variante, kann das Verfahren nach der Verfahrensbedingung 110 auch abgebrochen bzw. ohne Lösung beendet werden, sofern keine ausreichenden Referenzdaten bzw. Betriebsdaten vorliegen.

Bei der Verfahrensbedingung 112 wird geprüft, ob der wenigstens eine Spezifikationsparameter der mindestens einen komplexen Vorrichtung aufgrund der Konstruktionsparameter der vorangegangenen manuellen Designiteration bereits erreicht worden ist und/oder der manuelle Designprozess zu beenden ist - da etwa eine weitergehende Überprüfung des Designs, insbesondere mittels Simulation erforderlich sein könnte oder eine vorbestimmte maximale Anzahl an Designiterationen erreicht wurde. Falls der manuelle Designprozess fortzusetzen ist, d.h. insbesondere eine weitere manuelle Designiteration auszuführen ist, und/oder der wenigstens eine Spezifikationsparameter dieser mindestens einen komplexen Vorrichtung noch nicht erreicht worden ist - was im Flussdiagramm bei der Verfahrensbedingung 112 durch <n> symbolisiert ist -, wird erneut Verfahrensschritt 132 ausgeführt, so dass sich ein iteratives Verfahren, also ein iterativer Designprozess mit mehreren manuellen Designiterationen ergibt.

Falls der manuelle Designprozess zu beenden ist und/oder der wenigstens eine Spezifikationsparameter dieser mindestens einen komplexen Vorrichtung der Vielzahl an komplexen Vorrichtungen erreicht worden ist - was im Flussdiagramm bei Verfahrensbedingung 112 durch <y> symbolisiert ist -, werden im Verfahrensschritt 130 die (angepassten) Referenzdaten bereitgestellt, welche die Vielzahl an komplexen Vorrichtungen und deren jeweiligen wenigstens einen Spezifikationsparameter sowie jeweils Konstruktionsparameter kennzeichnen.

Alternativ oder zusätzlich kann in einigen Varianten das Verfahren 100 auch nebenläufig bzgl. des manuellen Designprozesses und den weiteren Verfahrensschritten 130, 142ff ausgeführt werden, sodass die Referenzdaten durch den manuellen Designprozess angepasst werden und zugleich - auch ohne Erreichen des wenigstens einen Spezifikationsparameters - und im Verfahrensschritt 130 für die weiteren Schritte bereitgestellt werden.

Durch das Aufzeichnen der Konstruktionsparameter je manueller Designiteration - insbesondere unabhängig davon, ob mit der jeweiligen Iteration der wenigstens eine Spezifikationsparameter erreicht oder zumindest weiter angenähert worden ist - kann insbesondere das neuronale Netzwerk mit jedem dieser Iterationsschritte trainiert werden, sodass sich eine ggü. einem nur teilweisen Aufzeichnen schnellere Konvergenz erzielen lässt.

Im Verfahrensschritt 142 wird die mindestens eine komplexe Vorrichtung je manueller Designiteration und auf Basis der jeweiligen Konstruktionsparameter zum Bestimmen ihrer jeweiligen Betriebsparameter simuliert.

Im Verfahrensschritt 144 werden die Betriebsdaten zumindest bezüglich dieser mindestens einen komplexen Vorrichtung angepasst und dabei die Betriebsparameter, welche mittels der Simulation bestimmt worden sind, je manueller Designiteration gespeichert und somit die Betriebsdaten angepasst.

Bei der Verfahrensbedingung 114 wird geprüft, ob auf Basis der Betriebsparameter aus der vorangegangenen Simulation mit den Konstruktionsparametern der vorangegangenen Designiteration bezüglich dieser mindestens einen komplexen Vorrichtung der wenigstens eine Spezifikationsparameter dieser mindestens einen komplexen Vorrichtung erreicht worden ist. Falls dies nicht der Fall ist - was im Flussdiagramm bei Verfahrensbedingung 114 durch <n> symbolisiert ist -, wird das Verfahren erneut und damit iterativ bei Verfahrensschritt 132 fortgesetzt.

In einigen vorteilhaften Varianten ist ein Kriterium für das Erreichen des wenigstens einen Spezifikationsparameters, dass der wenigstens eine Spezifikationsparameter innerhalb eines Toleranzbandes liegt, also insbesondere zwischen einem vorbestimmten Minimal- und Maximalwert liegt. Sofern mehrere Spezifikationsparameter - wie insbesondere Kundenanforderungen, Kurzschlussfestigkeit oder Werte aufgrund von Normen - zu erreichen sind, so ist bei solchen Varianten ein entsprechendes Kriterium auf jeden der Spezifikationsparameter anzuwenden.

Falls der wenigstens eine Spezifikationsparameter der mindestens einen komplexen Vorrichtung gemäß der simulierten Betriebsparameter erreicht worden ist - was im Flussdiagramm bei Verfahrensbedingungen 114 durch <y> symbolisiert ist -, werden im Verfahrensschritt 140 die Betriebsdaten bereitgestellt, welche gegebenenfalls entsprechend angepasst worden sind, und die die Vielzahl an komplexen Vorrichtungen und deren jeweilige Betriebsparameter, die mit den jeweiligen Konstruktionsparametern korrespondieren, kennzeichnen.

In einigen vorteilhaften Varianten können die Referenzdaten und die Betriebsdaten in einer ontologisch strukturierten Datenbank gespeichert sein und etwa bei den Verfahrensschritten 134 und 144 dort gespeichert werden sowie für die Verfahrensschritte 130 und 140 von der ontologisch strukturierten Datenbank abgerufen werden.

Falls bei der Vielzahl der komplexen Vorrichtungen keine mindestens eine komplexe Vorrichtung ergänzt werden soll - was im Flussdiagramm bei Verfahrensbedingungen 110 durch <n> symbolisiert ist -, wird das Verfahren bei Verfahrensschritt 130 fortgesetzt, wobei in einigen Varianten, insbesondere falls keine ausreichenden Betriebsparameter für die Betriebsdaten vorliegen, die Betriebsparameter in den Verfahrensschritten 142 und 144 bestimmt und die Betriebsdaten entsprechend angepasst werden. In anderen Varianten - nicht dargestellt - kann das Verfahren bei Verfahrensschritt 150 fortgesetzt werden, wobei die Referenzdaten und die Betriebsdaten bereitgestellt werden.

Iterativ wird im Verfahrensschritt 150 das neuronale Netzwerk trainiert und werden im Verfahrensschritt 160 die Konstruktionsparameter der komplexen Vorrichtung generiert. Dabei wird das Verfahren solange iterativ weiter ausgeführt bis gemäß Verfahrensbedingung 116 ein ausreichendes Training des neuronalen Netzwerkes erzielt worden ist und/oder eine vorbestimmte Maximalzahl an Iterationen erreicht worden ist - was im Flussdiagramm bei Verfahrensbedingung 160 durch <y> symbolisiert ist -.

Im Einzelnen wird dazu in einigen vorteilhaften Varianten folgendes ausgeführt.

Im Verfahrensschritt 150 wird das neuronale Netzwerk wenigstens auf Basis der Referenzdaten und der Betriebsdaten trainiert.

Im Verfahrensschritt 156, welcher wie dargestellt Teil des Verfahrensschritt 150 sein kann, wird zur Bewertung des Trainingsergebnisses und/oder für die nächste Iteration des Trainings eine Fehlergröße bestimmt, welche die Abweichung zwischen den Konstruktionsparametern der Referenzdaten und von mittels des neuronalen Netzwerks bestimmten Konstruktionsparametern sowie die Abweichung zwischen dem jeweiligen wenigstens einen Spezifikationsparameter und von jeweiligen Betriebsparametern, die mit den mittels des neuronalen Netzwerks bestimmten Konstruktionsparametern korrespondieren, aufweist.

Im Verfahrensschritt 160 werden die Konstruktionsparameter der komplexen Vorrichtung ausgehend von dem wenigstens einen Spezifikationsparameter und mittels des trainierten neuronalen Netzwerks generiert. In einigen Varianten - nicht dargestellt - kann zum Generieren der Konstruktionsparameter von einem Initialdesign ausgegangen werden, welches in einem weiteren Verfahrensschritt insbesondere durch eine Ähnlichkeitssuche über die ontologisch strukturierte Datenbank bestimmt wird.

Im Verfahrensschritt 162 wird die komplexe Vorrichtung auf Basis der generierten Konstruktionsparameter zum Bestimmen von Betriebsparametern der komplexen Vorrichtung simuliert. Dabei kann dieser Verfahrensschritt, wie dargestellt, ein Teil des Verfahrensschritts 160 sein.

Im Verfahrensschritt 166, welcher wie dargestellt ein Teil des Verfahrensschritts 160 sein kann, wird die Abweichung zwischen dem wenigstens einen Spezifikationsparameter und den - über die Simulation bestimmten - Betriebsparametern bestimmt, wobei die Fehlergröße auch diese Abweichung aufweist.

In einigen vorteilhaften Varianten kann das neuronale Netzwerk eingerichtet sein, die Konstruktionsparameter der komplexen Vorrichtung nicht nur als (finale Werte der) Konstruktionsparameter zu bestimmen, sondern die Konstruktionsparameter der komplexen Vorrichtung für mehrere Designiterationen und ausgehend von dem wenigstens einen Spezifikationsparameter der komplexen Vorrichtung zu bestimmen. Entsprechend bestimmt das neuronale Netzwerk beim Trainieren im Verfahrensschritt 150 jeweils die Konstruktionsparameter je Designiteration für die mindestens eine komplexe Vorrichtung der Vielzahl an komplexen Vorrichtungen und generiert das neuronale Netzwerk im Verfahrensschritt 160 jeweils die Konstruktionsparameter je Designiteration für die - zu entwerfende - komplexe Vorrichtung. Auf diese Weise lässt sich vorteilhaft der Designprozess einer Fachperson nachvollziehen, so dass auch das neuronale Netzwerk Konstruktionsparameter für eine Reihe von Designiterationen generiert und/oder optimiert.

Beim Bestimmen der Fehlergröße im Verfahrensschritt 156 werden in einigen vorteilhaften Varianten weiterhin die Abweichungen jeder Designiteration für die mindestens eine komplexe Vorrichtung, für welche die manuellen Designiterationen überwacht worden sind, zwischen den Konstruktionsparametern der Referenzdaten und von mittels des neuronalen Netzwerks bestimmten Konstruktionsparametern jeweils bestimmt, wobei die Fehlergröße auch diese Abweichungen aufweist. Zudem können in einigen vorteilhaften Varianten im Verfahrensschritt 156, bei welchen die Betriebsparameter für die mindestens eine komplexe Vorrichtung je manueller Designiteration simuliert worden sind, die Abweichungen je Designiteration für diese mindestens eine komplexe Vorrichtung zwischen dem wenigstens einem Spezifikationsparameter dieser mindestens einen komplexen Vorrichtung und den jeweiligen Betriebsparametern für die jeweilige Designiteration bestimmt werden, wobei die Fehlergröße auch diese Abweichungen aufweist.

Bei der Verfahrensbedingung 116 wird geprüft, ob das neuronale Netzwerk ausreichend trainiert worden ist, d.h. insbesondere ob die Fehlergröße in einem vorbestimmten Bereich liegt. Falls dies nicht der Fall ist, also etwa der Fehler, den das neuronale Netz beim Training macht, noch zu groß ist, - was im Flussdiagramm bei Verfahrensbedingung 116 durch <n> symbolisiert ist -, wird das Verfahren bei Verfahrensschritt 150 fortgesetzt.

Andernfalls, also bei einem ausreichend trainierten neuronalen Netzwerk oder wenn eine bestimmte Anzahl an maximalen Iterationen überschritten worden ist, - was im Flussdiagramm bei Verfahrensbedingung 116 durch <y> symbolisiert ist -, werden im Verfahrensschritt 170 die generierten Konstruktionsparameter ausgegeben. Dabei kann die bestimmte Anzahl an maximalen Iterationen insbesondere dann überschritten werden, wenn sich bis zum Erreichen der maximalen Iterationen kein ausreichend trainiertes neuronales Netz ergeben hat. Durch diese zusätzliche oder alternative Bedingung lassen sich undefiniert lange Trainingszeiten vermeiden und/oder das Verfahren auch fortsetzen, wenn das neuronale Netz noch nicht ausreichend trainiert ist, sodass zumindest eine, wenn auch etwaig nicht optimale, Lösung erzielt werden kann.

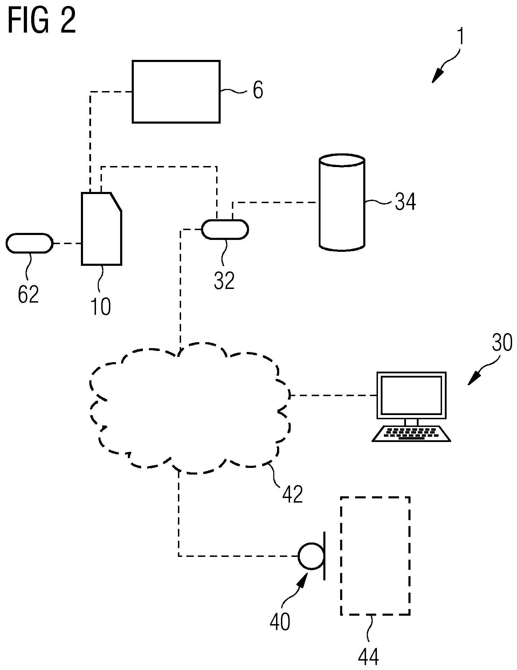

In Fig. 2 ist ein System 1 zum Generieren von Konstruktionsparametern einer komplexen Vorrichtung ausgehend von wenigstens einem Spezifikationsparameter nach einer Ausführungsform der vorliegenden Erfindung schematisch dargestellt.

In einem Ausführungsbeispiel weist das System 1 ein neuronales Netzwerk 6, eine Datenverarbeitungsvorrichtung 10, mehrere Datenschnittstellen 32, 62 und eine Datenspeichervorrichtung 34 auf. Das System 1 ist eingerichtet, ein Verfahren zum Generieren von Konstruktionsparametern gemäß einer Ausführungsform der vorliegenden Erfindung und insbesondere ein Verfahren 100 gemäß einer Ausführungsform bezüglich Fig. 1 auszuführen. Dazu kann in einer vorteilhaften Variante das System 1 ein Computerprogrammprodukt gemäß einer Ausführungsform der vorliegenden Erfindung aufweisen und/oder die Datenverarbeitungsvorrichtung 10 mittels computerlesbarer Anweisungen, welche das Computerprogrammprodukt aufweist oder bereitstellt, eingerichtet sein, ein entsprechendes Verfahren auszuführen.

In einem Ausführungsbeispiel weist das System 1 zudem eine Überwachungsvorrichtung 30 auf, welche eingerichtet ist manuelle Designiterationen für das Entwerfen von mindestens einer komplexen Vorrichtung zu überwachen, wobei in einigen Varianten die Überwachungsvorrichtung 30 als handelsüblicher Computer ausgebildet sein kann, auf dem Software zum Entwerfen von entsprechenden komplexen Vorrichtungen installiert ist. Mit einer solchen Überwachungsvorrichtung 30 kann eine Fachperson entsprechende komplexe Vorrichtungen entwerfen. Dabei werden die Eingaben der Fachperson, also insbesondere die eingegebenen Konstruktionsparameter für die jeweilige komplexe Vorrichtung, aufgezeichnet.

In einem Ausführungsbeispiel weist das System 1 weiterhin eine Sensorik 40 auf, welche eingerichtet ist Betriebsparameter von mindestens einer komplexen Vorrichtung zu erfassen.

Wie in Fig. 2 dargestellt, kann die mindestens eine komplexe Vorrichtung 44 in einigen Varianten ein Teil des Systems 1 sein, während sie in anderen Varianten des Systems 1 extern zu dem System ist. Dabei ist die Sensorik 40 eingerichtet, die Betriebsparameter der komplexen Vorrichtung 44 zu erfassen. Ein solches Erfassen kann in einigen vorteilhaften Varianten im Prüffeld oder permanent im Betrieb der komplexen Vorrichtung erfolgen.

In einigen Varianten kann die Sensorik 40 einen Temperatursensor, ein Mikrofon, einen Spannungssensor oder einen Lastsensor aufweisen.

Auch kann in einigen Varianten die Sensorik 40 eingerichtet sein, Temperaturen, Spannungen, elektrischen Leistungen bzw. Lasten, bestimmte chemische Verbindungen oder Geräusche zu erfassen und/oder eine sog. "oil in gas"-Analyse, eine Durchführungsüberwachung, eine Lastflussüberwachung, eine Leistungsmessung insbesondere bzgl. elektrischer Leistungen oder eine Teilentladungsmessung durchzuführen.

Auch ist in Fig. 2 das Internet 42 symbolisiert, wobei dieses nicht Teil des Systems 1 ist. Jedoch können verschiedene Komponenten des Systems 1 über das Internet 42 in Datenverbindung stehen.

In einigen Varianten ist die Datenschnittstelle 32 in Zusammenwirkung mit der Datenverarbeitungsvorrichtung 10 und der Datenspeichervorrichtung 34 eingerichtet, die Referenzdaten von der Überwachungsvorrichtung 30, insbesondere über das Internet 42, zu empfangen und die Betriebsdaten ebenfalls von der Überwachungsvorrichtung 30 und/oder von der Sensorik 40, insbesondere über das Internet 42, zu empfangen.

In einigen Varianten ist die Datenverarbeitungsvorrichtung 10 eingerichtet, die Referenzdaten und die Betriebsdaten in einer ontologisch strukturierten Datenbank auf der Datenspeichervorrichtung 34 zu speichern.

In einem Ausführungsbeispiel ist die Datenspeichervorrichtung 10 zudem eingerichtet, nach dem Trainieren des neuronalen Netzwerks 6 und dem Generieren der Konstruktionsparameter der komplexen Vorrichtung basierend auf dem wenigstens einen Spezifikationsparameter die generierten Konstruktionsparameter mittels der Datenschnittstelle 62 auszugeben. Dabei kann in einigen Varianten die Datenschnittstelle 62 als Benutzerschnittstelle oder als Netzwerkinterface ausgebildet sein.

In einigen Varianten kann die Datenverarbeitungsvorrichtung 10 als handelsüblicher Computer ausgebildet sein. Alternativ kann in einigen Varianten die Datenverarbeitungsvorrichtung 10 und insbesondere die Datenspeichervorrichtung 34 sowie eine Implementierung des neuronalen Netzes 6 als verteilte Rechenanlage, etwa als Server-Cluster, und weiter vorteilhaft insbesondere virtualisiert ausgebildet sein.

Für das neuronale Netzwerk 6 kann die Datenverarbeitungsvorrichtung 10 in einigen Varianten eine geeignete Programmierung - etwa ein mehrschichtiges neuronales Netz für Backpropagation - aufweisen. Auch kann in einigen vorteilhaften Varianten das System 1 eine spezifische Hardware für neuronale Netzwerke - etwa einen sogenannten Neuro-Prozessor - aufweisen, welcher eine besonders effiziente Prozessierung von derartigen neuronalen Algorithmen ermöglicht.

In einigen Varianten ist zu beachten, dass ein Transformator üblicherweise laut Norm Prüfungen unterlaufen muss. Typische Messungen im Prüffeld umfassen:
- Leerlaufverluste,
- Lastverluste,
- Kurzschlussimpedanz,
- Übersetzungsfehler,
- Kühlungsverhalten,
- Geräuschemission, und
- Isolationsfestigkeit mit Prüfspannungen.
Dabei kann die Sensorik 40 vorteilhaft für eine oder mehrere dieser Messungen eingerichtet sein.

Während Ausführungsbeispiele insbesondere unter Bezugnahme auf die Figuren detailliert beschrieben wurden, sei darauf hingewiesen, dass eine Vielzahl von Abwandlungen möglich ist. Außerdem sei darauf hingewiesen, dass es sich bei den exemplarischen Ausführungen lediglich um Beispiele handelt, die den Schutzbereich, die Anwendung und den Aufbau in keiner Weise einschränken sollen. Vielmehr wird der Fachperson durch die vorausgehende Beschreibung ein Leitfaden für die Umsetzung von mindestens einem Ausführungsbeispiel gegeben, wobei diverse Abwandlungen, insbesondere alternative oder zusätzliche Merkmale und/oder Abwandlungen der Funktion und/oder Anordnung der beschriebenen Bestandteile, nach Wunsch der Fachperson vorgenommen werden können, ohne dass dabei von dem in den angehängten Ansprüchen jeweils festgelegten Gegenstand sowie seiner rechtlichen Äquivalente abgewichen wird und/oder deren Schutzbereich verlassen wird.

## Patentansprüche

1. Computergestütztes Verfahren (100) zum Generieren von Konstruktionsparametern einer komplexen Vorrichtung ausgehend von wenigstens einem Spezifikationsparameter mittels eines neuronalen Netzwerks, wobei das Verfahren aufweist:
- Bereitstellen (130) von Referenzdaten, welche eine Vielzahl an komplexen Vorrichtungen und deren jeweiligen wenigstens einen Spezifikationsparameter sowie jeweils Konstruktionsparameter kennzeichnen;
- Bereitstellen (140) von Betriebsdaten, welche die Vielzahl an komplexen Vorrichtungen und deren jeweilige Betriebsparameter, die mit den jeweiligen Konstruktionsparametern korrespondieren, kennzeichnen;
- Trainieren (150) des neuronalen Netzwerks auf Basis der Referenzdaten und der Betriebsdaten; und
- Generieren (160) der Konstruktionsparameter der komplexen Vorrichtung ausgehend von dem wenigstens einen Spezifikationsparameter und mittels des trainierten neuronalen Netzwerks.

2. Computergestütztes Verfahren (100) gemäß Anspruch 1, welches weiterhin aufweist:
- Überwachen (132) von manuellen Designiterationen (112, 114) von mindestens einer komplexen Vorrichtung der Vielzahl an komplexen Vorrichtungen zum Erreichen des wenigstens einen Spezifikationsparameters dieser mindestens einen komplexen Vorrichtung;
- Anpassen (134) der Referenzdaten, wobei bezüglich dieser mindestens einen komplexen Vorrichtung die Konstruktionsparameter je manueller Designiteration gespeichert werden; und
- Anpassen (144) der Betriebsdaten, wobei bezüglich dieser mindestens einen komplexen Vorrichtung die Betriebsparameter je manueller Designiteration gespeichert werden;
und wobei das neuronale Netzwerk auf Basis dieser angepassten Referenzdaten und Betriebsdaten trainiert (150) wird.

3. Computergestütztes Verfahren (100) gemäß Anspruch 1 oder 2, weiterhin aufweisend Simulieren (162) der komplexen Vorrichtung auf Basis der generierten Konstruktionsparameter zum Bestimmen von Betriebsparametern der komplexen Vorrichtung; und wobei das Trainieren (150) des neuronalen Netzwerks zudem auf dem wenigstens einen Spezifikationsparameter und den Betriebsparametern der komplexen Vorrichtung basiert.

4. Computergestütztes Verfahren (100) gemäß Anspruch 3, wobei das Trainieren (150) des neuronalen Netzwerks iterativ (116) unter jeweiliger Simulation (162) der komplexen Vorrichtung auf Basis der jeweils generierten (160) Konstruktionsparameter ausgeführt wird.

5. Computergestütztes Verfahren (100) gemäß einem der vorhergehenden Ansprüche, weiterhin aufweisend:
- Simulieren (142) von mindestens einer komplexen Vorrichtung der Vielzahl an komplexen Vorrichtungen zum Bestimmen ihrer Betriebsparameter für das Bereitstellen (140) oder Anpassen (144) der Betriebsdaten.

6. Computergestütztes Verfahren (100) gemäß einem der vorhergehenden Ansprüche, wobei zum Bereitstellen (140) der Betriebsdaten für mindestens eine komplexe Vorrichtung der Vielzahl an komplexen Vorrichtungen die Betriebsparameter von einer Sensorik, die zum Messen der Betriebsparameter dieser mindestens einen komplexen Vorrichtung eingerichtet ist, empfangen werden.

7. Computergestütztes Verfahren (100) gemäß Anspruch 6, weiterhin aufweisend:
- Messen der Betriebsparameter dieser mindestens einen komplexen Vorrichtung (44) mittels der Sensorik (40).

8. Computergestütztes Verfahren (100) gemäß einem der vorhergehenden Ansprüche, wobei beim Trainieren (150) eine Fehlergröße bestimmt (156, 166) wird, welche die Abweichung zwischen den Konstruktionsparametern der Referenzdaten und von mittels des neuronalen Netzwerks bestimmten Konstruktionsparametern sowie die Abweichung zwischen dem jeweiligen wenigstens einen Spezifikationsparameter und von jeweiligen Betriebsparametern, die mit den mittels des neuronalen Netzwerks bestimmten Konstruktionsparametern korrespondieren, aufweist.

9. Computergestütztes Verfahren (100) gemäß Anspruch 8, wobei:
die Referenzdaten für mindestens eine komplexe Vorrichtung der Vielzahl an komplexen Vorrichtungen für mehrere Designiterationen zum Erreichen des wenigstens einen Spezifikationsparameters jeweils je Designiteration Konstruktionsparameter kennzeichnen;
die Betriebsdaten für diese mindestens eine komplexe Vorrichtung jeweils je Designiteration Betriebsparameter kennzeichnen, die mit den Konstruktionsparametern bezüglich dieser mindestens einen komplexen Vorrichtung und bezüglich der jeweiligen Designiteration korrespondieren;
das neuronale Netzwerk eingerichtet ist, ausgehend von dem wenigstens einen Spezifikationsparameter dieser mindestens einen komplexen Vorrichtung für mehrere Designiterationen jeweils die Konstruktionsparameter zu bestimmen; und
beim Bestimmen (156) der Fehlergröße weiterhin die Abweichungen je Designiteration für diese mindestens eine komplexe Vorrichtung zwischen den Konstruktionsparametern der Referenzdaten und von mittels des neuronalen Netzwerks bestimmten Konstruktionsparametern bestimmt werden und die Fehlergröße diese Abweichungen aufweist.

10. Computergestütztes Verfahren (100) gemäß Anspruch 9, weiterhin aufweisend Simulieren (142) von der mindestens einen komplexen Vorrichtung je Designiteration und auf Basis der jeweiligen Konstruktionsparameter zum Bestimmen ihrer jeweiligen Betriebsparameter für das Bereitstellen (140) oder für das Anpassen (144) der Betriebsdaten; und wobei beim Bestimmen (156) der Fehlergröße weiterhin die Abweichungen je Designiteration für diese mindestens eine komplexe Vorrichtung zwischen dem wenigstens einen Spezifikationsparameter dieser mindestens einen komplexen Vorrichtung und den jeweiligen Betriebsparametern für die jeweilige Designiteration bestimmt werden und die Fehlergröße diese Abweichungen aufweist.

11. Computergestütztes Verfahren (100) gemäß einem der Ansprüche 8-10, wobei:
das neuronale Netzwerk zum Generieren (160) der Konstruktionsparameter der komplexen Vorrichtung je Designiteration von mehreren Designiterationen ausgehend von dem wenigstens einen Spezifikationsparameter der komplexen Vorrichtung eingerichtet ist;
je Designiteration die jeweiligen Betriebsparameter der komplexen Vorrichtung simuliert (162) werden; und
beim Bestimmen der Fehlergröße (156, 166) weiterhin je Designiteration die Abweichung zwischen dem wenigstens einen Spezifikationsparameter und den jeweiligen Betriebsparametern bestimmt (166) wird und die Fehlergröße diese Abweichungen aufweist.

12. Computergestütztes Verfahren (100) gemäß einem der Ansprüche 8-11, wobei das Trainieren (150) mittels eines Backpropagation-Algorithmus ausgeführt und die Fehlergröße minimiert wird.

13. Computergestütztes Verfahren (100) gemäß einem der vorhergehenden Ansprüche, wobei:
in einer ontologisch strukturierten Datenbank die Referenzdaten und/oder die Betriebsdaten gespeichert (130, 140) sind und/oder für mindestens eine komplexe Vorrichtung der Vielzahl an komplexen Vorrichtungen ein Initialdesign gespeichert ist;
das Verfahren weiterhin ein Bestimmen eines Initialdesigns der komplexen Vorrichtung basierend auf einer Ähnlichkeitssuche über die ontologisch strukturierte Datenbank ausgehend von dem wenigstens einen Spezifikationsparameter aufweist;
und wobei:
das Trainieren (150) des neuronalen Netzwerks zudem auf dem Initialdesign der komplexen Vorrichtung und/oder auf dem Initialdesign der mindestens einen komplexen Vorrichtung basiert; und/oder
das Generieren (160) der Konstruktionsparameter der komplexen Vorrichtung des Weiteren von dem Initialdesign der komplexen Vorrichtung ausgeht.

14. System (1) zum Generieren von Konstruktionsparametern einer komplexen Vorrichtung ausgehend von wenigstens einem Spezifikationsparameter, wobei das System (1) aufweist:
ein neuronales Netzwerk (6);
eine Datenverarbeitungsvorrichtung (10); und
eine oder mehrere Datenschnittstellen (32, 62) zum Empfangen von Referenzdaten, welche eine Vielzahl an komplexen Vorrichtungen und deren jeweiligen wenigstens einen Spezifikationsparameter sowie jeweils Konstruktionsparameter kennzeichnen, und zum Empfangen von Betriebsdaten, welche die Vielzahl an komplexen Vorrichtungen und deren jeweilige Betriebsparameter, die mit den jeweiligen Konstruktionsparametern korrespondieren, kennzeichnen;
und wobei die Datenverarbeitungsvorrichtung (10) eingerichtet ist:
- die Referenzdaten und die Betriebsdaten mittels einer der Datenschnittstellen (32) zu empfangen;
- das neuronale Netzwerk (6) auf Basis der Referenzdaten und der Betriebsdaten zu trainieren; und
- die Konstruktionsparameter der komplexen Vorrichtung ausgehend von dem wenigstens einen Spezifikationsparameter und mittels des trainierten neuronalen Netzwerks (6) zu generieren.

15. Computerprogrammprodukt zum Generieren von Konstruktionsparametern einer komplexen Vorrichtung ausgehend von wenigstens einem Spezifikationsparameter, wobei das Computerprogrammprodukt computerlesbare Anweisungen aufweist oder bereitstellt, die bei Ausführung auf einer Datenverarbeitungsvorrichtung (10) diese veranlassen, ein neuronales Netzwerk (6) auf Basis von Referenzdaten und von Betriebsdaten zu trainieren sowie die Konstruktionsparameter der komplexen Vorrichtung ausgehend von dem wenigstens einen Spezifikationsparameter und mittels des trainierten neuronalen Netzwerks (6) zu generieren, wobei die Referenzdaten eine Vielzahl an komplexen Vorrichtungen und deren jeweiligen wenigstens einen Spezifikationsparameter sowie jeweils Konstruktionsparameter kennzeichnen, und wobei die Betriebsdaten die Vielzahl an komplexen Vorrichtungen und deren jeweilige Betriebsparameter, die mit den jeweiligen Konstruktionsparametern korrespondieren, kennzeichnen.
